# EUROPEAN PATENT SPECIFICATION

(11) **EP 3 464 131 B1**
(45) Date of publication and mention of the grant of the patent: **12.05.2021**
(21) Application number: 17739304.8
(22) Date of filing: 22.05.2017
(51) Int. Cl.: B65G 45/02, B65G 51/03, C10M 173/02

(54) **AIR CONVEYOR**
LUFTFÖRDERER
CONVOYEUR D'AIR

(30) Priority: 26.05.2016 WO PCT/IB2016/000720
(43) Date of publication of application: 10.04.2019
(73) Proprietor: CHP N.V., 9120 Beveren (BE)
(72) Inventor: TURCK, Pieter, 2950 Kapellen (BE)
(74) Representative: Powis de Tenbossche, Roland
(86) International application number: PCT/IB2017/000610
(87) International publication number: WO 2017/203344

(56) References cited:
- EP-A1- 1 494 943
- US-B2- 8 801 341

## Description

### Abstract of the disclosure

The invention has for subject matter an air conveyor adapted for moving containers.

Such an air conveyor is disclosed for example in the following documents: US8801341, EP1637482.

More specifically US8801341 discloses an air conveyor moving containers with a collar having a downwards face contacting a support path, by applying a pneumatic force on said containers. The air conveyor comprises:
- a gas directing means for directing gas towards the container to be moved, and
- a supporting path comprising a first guiding profile with a lateral guiding edge and a second supporting guiding profile with a second lateral guiding edge, said second lateral guiding edge being distant from the said first lateral guiding edge for defining there between an open space for the collar of the container to be moved, said first and second supporting guiding profiles having each an upper face acting as supporting face contacting a portion of said downwards face of the collar of the container to be moved. The first and second supporting guiding profile are comprising respectively a first and second lubricant dispensing means, which comprise each a dispensing channel with an inlet to be connected to a lubricant dispensing system and an outlet with an outlet opening with an equivalent diameter of 0.3 to 15mm. The outlet opening is located at least partly along the upper face of the first or second guiding profile adjacent to the guiding edge.

### Brief description of the invention

More specifically, the invention is defined by an air conveyor adapted for moving containers having a top portion with a collar with a downwards face by applying a pneumatic force on said containers, according to the appended claim 1.

Such lubricant dispensing means are easy to be replaced, in case of problems, while not taking large space. As the volume of the flat insert is low, the heating due to the contact of a collar portion of the containers on the top face of the flat insert is limited. As the flat insert is easily mounted, it can be easily replaced in case of need (for example in case of wear/friction of the surface and/or dust problem within the inner channel or at the outlet), such replacement does not requiring a long period of stoppage of the air conveyor.

Advantageously the outlet opening extends only along the said flat surface adjacent to the said free edge.

Preferably the free edge has in transversal cross-section a circular portion on an angle of more than 90°, advantageously from 90° to 179°.

According to an embodiment, the outlet opening extends in the circular portion of the free edge adjacent to the flat surface, advantageously on a section up to 10° of said circular portion.

According to an advantageous detail of an embodiment the inner channel defining the dispensing channel comprises a first linear section adjacent or starting from the inlet opening (said first linear section being thus located between the second linear section and the inlet) and a second linear section ending with the outlet opening, said first and second linear sections communicating the one with the other, whereby the first linear section has a first central axis, while the second linear section has a second central axis, whereby an angle comprised between 90° and 179°, advantageously between 100° and 160°, is defined between said first and second central axes of said first and second linear sections. The first linear section has an open cross section (defined perpendicular to the first central axis) which is advantageously at least 50% greater than the open cross section (defined perpendicular to the second central axis) of the second linear section.

The air conveyor of the invention has advantageously one or more of the following characteristics:
the first and second supporting guiding profiles comprise each a longitudinal support system, at least two supporting guiding flaps or strips adapted to be attached on the longitudinal support system of the first or second supporting guiding profiles, said at least two supporting guiding flaps or strips having a free longitudinal edge adapted to form a portion of the first or second lateral guiding edge element,
whereby a first and a second supporting guiding flaps or strips of said at least two supporting guiding profiles are separated the one with respect to the other by a flat insert attached to the longitudinal support system, said flat insert comprising an one piece body having a free edge extending from a first end up to a second end, said one piece body being mounted on the longitudinal support system so that the free edge of the one piece body forms a continuous extension between the free longitudinal edge of the first supporting guiding strip and the free longitudinal edge of the second supporting guiding strip. And/or
the first and second lubricant dispensing means are shifted the one with respect to the other, so that the first lubricant dispensing means and the second lubricant dispensing means are contacting a portion of the downwards face of the collar of the top portion of a container to be moved at different moments. And/or
the flat insert or intermediate element is made in a plastic material, especially in a thermoplastic, especially by three dimension printing (3D thermo forming). In some embodiments, not part of the invention, the inner channel can be drilled or partly drilled, for example partly drilled at the outlet and/or at the inlet. In some other embodiment, not part of the invention, the flat insert is injected into a mould (like injection mould). And/or
the first and second lubricant dispensing means have free edges not in front the one with respect to the other, the free edges of said first and second lubricant dispensing means being distant the one with respect to the other by a distance comprised between 1cm and 50cm, advantageously from 10cm and 30cm. And/or
the first and second supporting guiding profiles comprise each a longitudinal support system, whereby each longitudinal support system and the first or second lubricant dispensing means are provided with attaching means adapted for enabling a fixation of the first or second lubricant dispensing means on the longitudinal support system by a click system. And/or
the flat insert is at least partly flexible along a longitudinal axis. And/or
the flat insert or the intermediate element associated to the flat insert is provided with a handling means along an edge opposite to the free edge which forms a continuous extension of the first or second lateral guiding edge of the first or second profile. And/or
the flat insert or the intermediate element associated to the flat insert has a substantially a U- or L- shaped cross section with a flat web bearing at its two longitudinal ends a first aisle or flange with the free edge which forms a continuous extension of the first or second lateral guiding edge of the first or second profile, and a second aisle or flange distant from the first aisle or flange, whereby the flat web is provided with an extension adapted for forming a handling means. And/or
the inlet of the flat insert is provided with a easy connecting means for connecting the flat insert to a tube connected to the lubricant dispensing system. And/or
the free edge of the flat insert is formed by a substantially flat surface connected to an upper flat surface through a connecting area having in cross section a radius of curvature of less than 2mm, advantageously less than 1mm, preferably less than 0.5mm.

In an embodiment, not part of the invention, the flat insert is preferably made of plastic, for example of a thermo formable fluorinated polymer, especially in fluoro polyethylene, fluoro propylene or fluoro ethylene - propylene copolymer. Other possible materials are acrylic resin, methacrylic resin, acrylic-methacrylic resin, PET, PETP, etc.

In an embodiment, the flat insert or the intermediate element is at least partly made of a transparent polymer or copolymer, whereby enabling a control of the flow of lubricant through the inner channel.

And/or
the flat insert of at least one of the first or second lubricant dispensing means has a curved free guiding edge.

And/or
the lubricant dispensing system for the first and second lubricant dispensing means is adapted for delivering intermittently lubricant doses of advantageously less than 1ml, preferably less than 0.5ml.

And/or
the flat insert or the intermediate element associated to the flat insert is provided with a tube system at its inlet, said tube system being adapted for an easy connection to a tube of the lubricant dispensing system.

And/or
the flat insert or the intermediate element associated to the flat insert is provided with a tube system at its inlet, said tube system comprising a first tube portion and a second tube portion connected there between by a connector enabling a relative rotation movement between the first tube portion and the second tube portion.

And/or
the outlet opening of the flat insert or the intermediate element associated to the flat insert is located at least partly along the said free edge which forms a continuous extension of the first or second lateral guiding edge of the first or second profile.

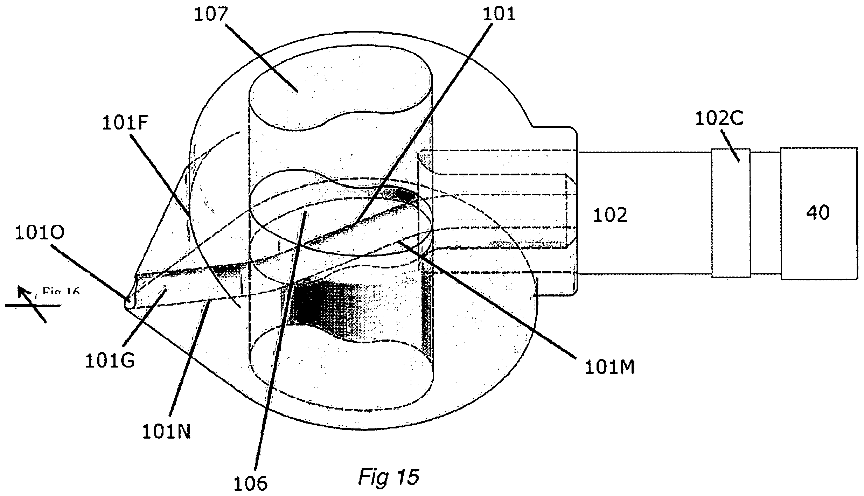

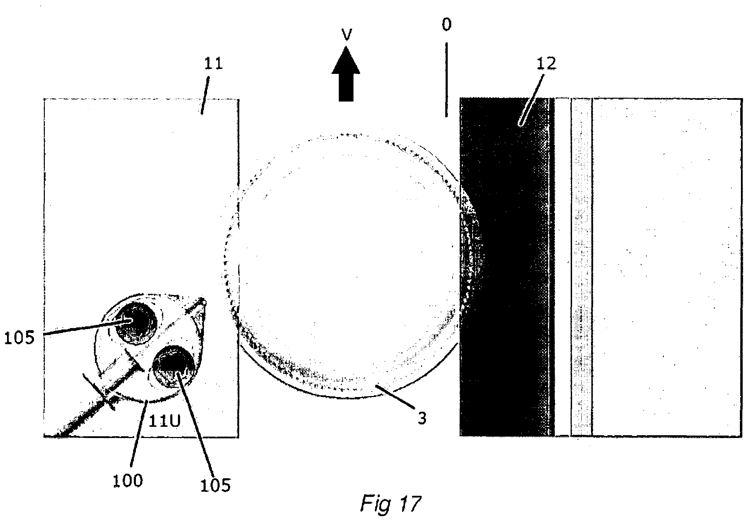

An air conveyor, not part of the invention, can be provided with first and second lubricant dispensing means being each a top lubrication device or insert 100 (see figures 15 to 17) with a thickness of preferably less than 2cm, advantageously less than 1 cm, preferably less than 0.5cm, a length of preferably less than 15cm (advantageously less than 5cm, most preferably less than 3cm, such as less than 2cm, or even less than 1 cm) and a width in relation to the width of the guiding profile so as to avoid direct contact with the top portion of the bottle, advantageously of less than 5cm (advantageously less than 2cm, preferably less than 1cm), made by a mechanical, thermo forming or printing process (3D printing process) of a plastic or metallic material, advantageously a thermo formable material (advantageously in a thermoplastic material), said top lubrication device or insert (100) comprising an one piece body with an inner channel (101) defining the dispensing channel element having an inlet 101I (advantageously provided with a connecting element or groove 101IC) adapted to be connected to a lubricant dispensing system 40 (for example via a connector 102), and an outlet with an outlet opening 101O with an equivalent diameter of 0.3mm to 7mm, advantageously from 0.8mm to 3mm, said one piece body 100 having an end face directed towards the open space for the top portion of the containers to be moved, whereby said outlet opening of the inner dispensing channel of said one piece body is located on said end face 101F, whereby said one piece body is adapted to be mounted on or associated to the upper face of the first or second supporting guiding profile so that the said end face 101F of the one piece body does not contact the collar 3 of the containers to be moved.

Such top lubricant dispensing means are easy to be replaced, in case of problems, while not taking large space. As the top lubrication device or insert is easily mounted, it can be easily replaced in case of need (for example in case of dust problem within the inner channel or at the outlet), such replacement does not requiring a long period of stoppage of the air conveyor.

Such alternative top lubrication devices can also be used with guiding profile(s) associated to one or more flat insert (with or without intermediate element).

Advantageously the outlet opening (101O is a portion of the 101N) of a top lubrication device extends preferably at least partly along the said flat upper face 11U of the first or second supporting guiding profile, distant from the first or second lateral guiding edge, so that the said outlet opening is distant by at least 0,3 mm, advantageously at least 0.5mm, preferably at least 1mm (but most preferably less than 7mm) from the collar of the containers to be moved.

Preferably the end face 101F of the top lubrication device or insert is at least partly curved, for example has in transversal cross-section a circular portion, advantageously on an angle of more than 45°, advantageously from 90° to 180°, preferably from 100° to 160°.

According to an embodiment, not part of the invention, the top lubrication device or insert 100 has a bottom face adapted to contact (advantageously directly) the upper face 11U of the first or second supporting guiding profiles, whereby the outlet opening 101O extends along the end face 101F along the bottom face of the insert or part thereof. In an embodiment, the dispensing channel comprises at least partly a groove 101G (open along the bottom face) extending along the bottom face of the insert, from the end outlet opening 1010.

According to an advantageous detail of an embodiment, not part of the invention, the inner channel defining the dispensing channel comprises at least a first linear section 101N ending with the outlet, and a second linear section 101M extending between the first linear section 101N and the inlet 1011, said first and second linear sections communicating the one with the other, whereby the first linear section has a first central axis, while the second linear section has a second central axis, whereby an angle comprised between 90° and 179°, advantageously from 100° and 160° is defined between said first and second central axes of said first and second linear sections. The first linear section has an open cross section (defined perpendicular to the first central axis) which is advantageously at least 50% (preferably from 75% up to 250%) greater than the open cross section (defined perpendicular to the second central axis) of the second linear section.

According to an advantageous detail of an embodiment the inner channel defining the dispensing channel comprises a first linear section starting from the inlet opening and a second linear section ending with the outlet opening, said first and second linear sections communicating the one with the other, whereby the first linear section has a first central axis, while the second linear section has a second central axis, whereby an angle comprised between 90° and 179°, advantageously from 100° and 160° is defined between said first and second central axes of said first and second linear sections. The first linear section has an open cross section (defined perpendicular to the first central axis) which is advantageously at least 50% (preferably from 75% up to 250%) greater than the open cross section (defined perpendicular to the second central axis) of the second linear section.

The invention relates also to a method for moving plastic bottles or necks thereof along a guiding path according to the appended claim 15.

Details and characteristics of preferred embodiments will appear from the following description in which reference is made to the attached drawings.

### Brief description of the drawings

In said drawings,
Figure 1 is a schematic perspective view of an air conveyor;

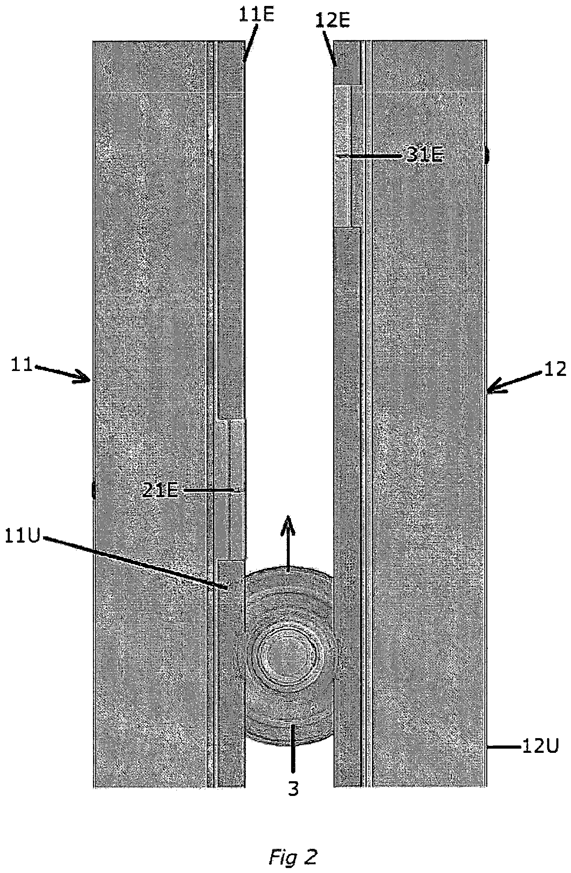

Figure 2 is an upper view of an air conveyor of Figure 1;

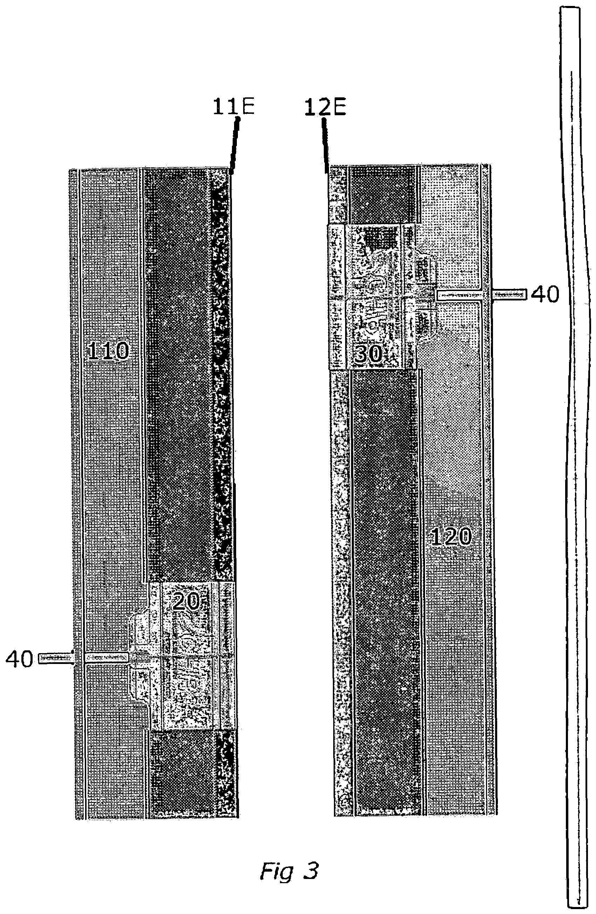

Figure 3 is a bottom view of the air conveyor of Figure 1;
Figure 4 is an enlarged perspective view of a lubricant dispensing means of the conveyor of Figure 1;
Figure 5 is a cross section view of the lubricant dispensing means of figure 4 along the line V-V;
Figure 6 is a perspective view of a lubrication flat insert acting as lubricant dispensing means;
Figure 7 is an upper view of the flat insert of Figure 5;
Figure 8 is a cross section of the flat insert of Figure 5 along the line VIII-VIII;
Figure 9 is a perspective view of another embodiment of an insert;
Figure 10 is a cross section view of the insert of Figure 9 along the line X-X,
Figure 11 and 12 are respectively a perspective view and a lateral view of a guiding insert provided with a lubricant dispensing channel (shown in dashed lines) similar to that shown in figures 6 to 8,
Figures 13A and 13B are respectively a perspective view a lateral view of a tool for drilling or for forming a linear section 21N adjacent to the outlet opening 22,
Figures 14 A1,A2,B1,B2,C1,C2,D1,D2,E1 and E2 are views (perspective views and lateral views) of various embodiments of flat inserts of the invention.
Figure 15 is a perspective view of an alternative insert to be mounted on the upper face of the supporting guiding profile;
Figure 16 is a cross section view of the alternative insert of Figure 11 along the line XII-XII, and
Figure 17 is an upper view of a supporting guiding profile associated to an insert of Figure 15.

### Description of preferred embodiments

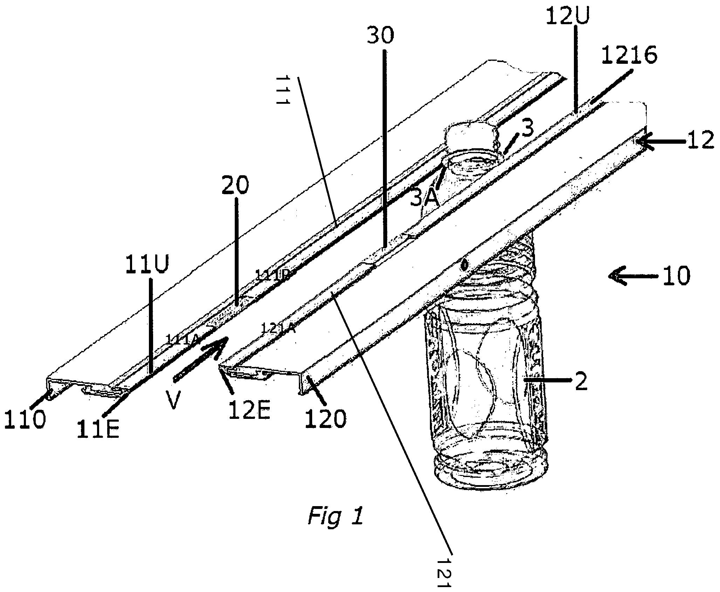

Figure 1 shows an air conveyor 1 adapted for moving containers (such as bottle 2) having a top portion with a collar (for example in the form of a circular flange 3) with a downwards face 3a by applying a pneumatic force (for example in the form of air pulses from air nozzles - not shown) on said containers, for example on neck portion thereof.

The conveyor comprises:
- An gas (such as air, CO₂, a sterilized gas) directing means (such as one or more nozzles - not shown on the figure) adapted for directing gas towards the containers 2 to be moved (in the direction V);
- A supporting path 10 comprising a first supporting guiding profile 11 with a first lateral guiding edge 11E and a second supporting guiding profile 12 with a second lateral guiding edge 12E, said second lateral guiding edge 12E being distant from the said first lateral guiding edge 11E for defining there between an open space O for the top portion of the containers 2 to be moved, said first and second supporting guiding profiles 11,12 having each an upper face 11U,12U acting as supporting face contacting a portion of the downwards face 3a of the collar 3 of the top portion of the containers 2 to be moved.

The first supporting guiding profile 11 and the second supporting guiding profile 12 are associated respectively with a first lubricant dispensing means 20 and a second lubricating dispensing means 30, said first and second lubricant dispensing means 20,30 comprising each a dispensing channel 21,31 having an inlet 21I,31I adapted to be connected to a lubricant dispensing system 40, and an outlet 210,310 with an outlet opening 22,32 with an equivalent diameter of 0.3mm to 7mm. The equivalent diameter of a section corresponds to 4 times the open surface of the section divided by the periphery. For a circular opening, the equivalent diameter is equal to the diameter.

The first and second lubricant dispensing means 20,30 are each a flat insert or an intermediate element associated to the flat insert, with a thickness of less than 2 cm, a length of less than 15cm and a width of less than 5cm, made by a thermo forming process with a thermo formable material, said flat insert comprising an one piece body with an inner channel 21,31 defining the dispensing channel element having an inlet 21I,31I adapted to be connected to a lubricant dispensing system 40 (adapted for intermittent injection of micro doses of lubricant within the dispensing channel), and an outlet with an outlet opening 22,23 with an equivalent diameter of 0.3mm to 7mm, said one piece body having a free edge 21E,31E extending from a first end 24 up to a second end 25, said one piece body being adapted to be mounted on the first or second supporting guiding profile so that the free edge 21E,31E of the one piece body forms a continuous extension of the first or second lateral guiding edge 11E,12E of the first or second profile 11,12, whereby said one piece body comprises a flat surface 21U,31U adjacent to the said free edge 21E,31E and adapted for supporting a portion of the downwards face 3a of the collar 3 of the top portion of the containers 2 to be moved, and whereby said outlet opening 22,23 extends at least partly along said flat surface 21U,31U adjacent to the said free edge 21E,31E.

The first and second supporting guiding profiles 11,12 comprise each a longitudinal support system 110,120, at least two supporting guiding flaps or strips 111,121 adapted to be attached on the longitudinal support system 110,120 of the first or second supporting guiding profiles, said at least two supporting guiding flaps or strips 111,121 having a free longitudinal edge 11E,12E adapted to form a portion of the first or second lateral guiding edge element.

A first and a second supporting guiding flaps or strips 111a,111b,121a,121b (successive flaps or strips) of said at least two supporting guiding profiles 11,12 are separated the one with respect to the other by a flat insert 20,30 attached to the longitudinal support system 110,120, said flat insert 20,30 comprising an one piece body having a free edge 21E,31E extending from a first end up to a second end 24,25, said one piece body being mounted on the longitudinal support system 110,120 so that the free edge 21E,31E of the one piece body forms a continuous extension between the free longitudinal edge of the first supporting guiding flap or strip and the free longitudinal edge of the second supporting guiding flap or strip.

The first and second lubricant dispensing means 20,30 are shifted the one with respect to the other, so that the first lubricant dispensing means 20 and the second lubricant dispensing means 30 are contacting a portion of the downwards face 3a of the collar of the top portion of a container to be moved at different times (for example contact times distant the one from the other of less than 30seconds, corresponding to a spatial distance D of less than 50cm).

The flat insert 20,30 can be made in a thermo formable material by three dimension printing (3D thermo forming).

The first and second lubricant dispensing means 20,30 have free edges 21E,31E not in front the one with respect to the other, the free edges of said first and second lubricant dispensing means being distant the one with respect to the other by a distance comprised between 5 and 50cm, advantageously from 10cm and 30cm.

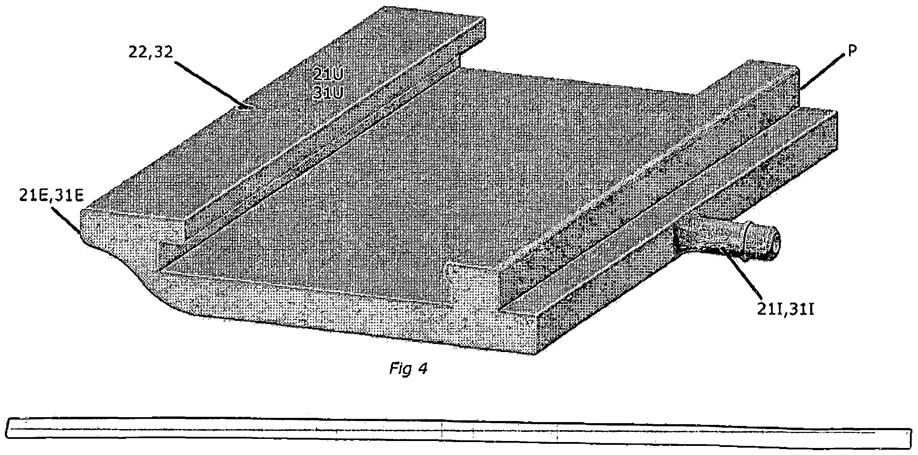

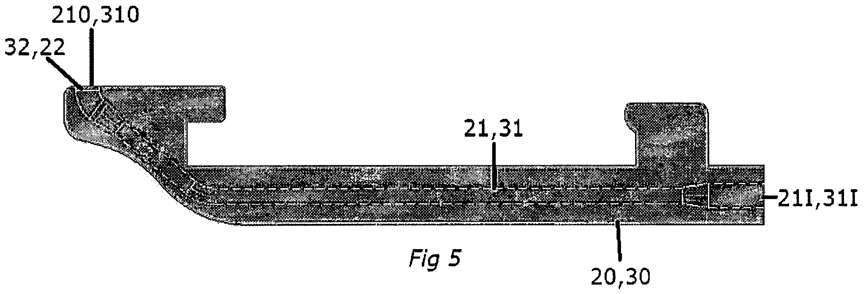

Figures 4 and 5 are views of a specific lubricant dispensing means. The first and second supporting guiding profiles comprise each a longitudinal support system 110,120, whereby each longitudinal support system and the first or second lubricant dispensing means 20,30 are provided with attaching means (protuberance P, groove G adapted for enabling a fixation of the first or second lubricant dispensing means 20,30 on the longitudinal support system 110,120 by a click system.

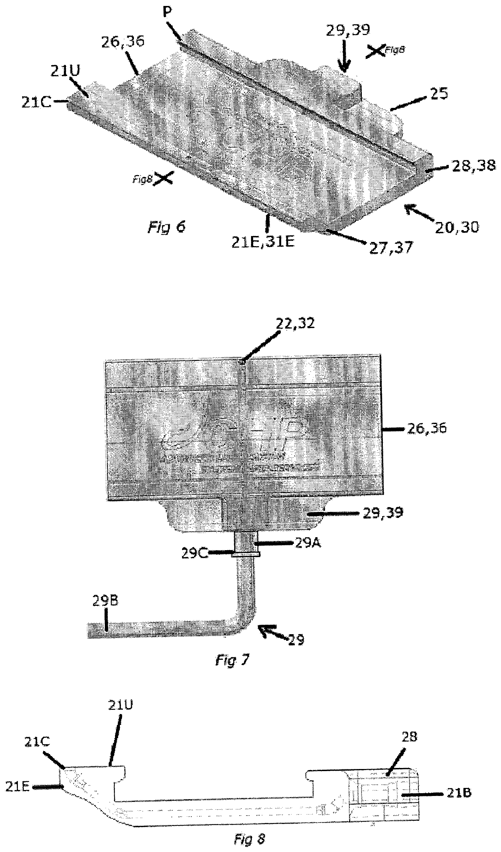

Figures 6 to 8 are views of a flat insert similar to the insert of figures 4 and 5. The flat insert 20,30 or an intermediate element associated to the flat insert is at least partly flexible along a longitudinal axis. The flat insert is provided with a handling means 25 along an edge 22,32 opposite to the free edge 21E,31E which forms a continuous extension of the first or second lateral guiding edge 11E,12E of the first or second profile 11,12.

The flat insert 20,30 has a substantially a U-shaped cross section with a flat lower web 26,36 bearing at its two longitudinal ends a first aisle or flange 27,37 with the free edge 21E,31E which forms a continuous extension of the first or second lateral guiding edge 11E,12E of the first or second profile 11,12, and a second aisle or flange 28,38 distant from the first aisle or flange, whereby the flat web is provided with an extension 29,39 adapted for forming a handling means.

The flat insert is provided with an easy connecting means for connecting the flat insert to a tube connected to the lubricant dispensing system.

The free edge 21E of the flat insert is formed by a substantially flat surface connected to an upper flat surface 21U through a connecting area 21C having in cross section a radius of curvature of less than 2mm, advantageously less than 1mm, preferably less than 0.5mm.

Another embodiment of the flat insert 20,30 is shown in figures 6 and 7.

The flat insert or an intermediate element associated to the flat insert is advantageously made of a thermo formable fluorinated polymer, especially in fluoro polyethylene, fluoro propylene or fluoro ethylene - propylene copolymer. Possibly, the flat insert is at least partly made of a transparent polymer or copolymer, whereby enabling a control of the flow of lubricant through the inner channel.

As the flat insert is able to be thermo formed, the flat insert of at least one of the first or second lubricant dispensing means can have a curved free guiding edge.

The lubricant dispensing system 40 for the first and second lubricant dispensing means is adapted for delivering intermittently lubricant doses of less than 1ml, advantageously less than 0.5ml.

The flat insert is provided with a tube system 29 at its inlet 21I, said tube system being adapted for an easy connection to a tube of the lubricant dispensing system 40.
For example, said tube system comprises a first tube portion 29A and a second tube portion 29B connected there between by a connector 29C enabling a relative rotation movement between the first tube portion 29A and the second tube portion 29B.

The outlet opening 22 of the flat insert or of an intermediate element associated to the flat insert is advantageously located at least partly along the said free edge 21E which forms a continuous extension of the first or second lateral guiding edge of the first or second profile.

According to preferred embodiments, the free edge 21E of the said one piece body has in transversal cross-section a circular portion on an angle of more than 100°, advantageously from 100° to 160°.
The outlet opening 22 extends in the circular portion of the free edge adjacent to the flat surface, advantageously on a section up to 10° of said circular portion.

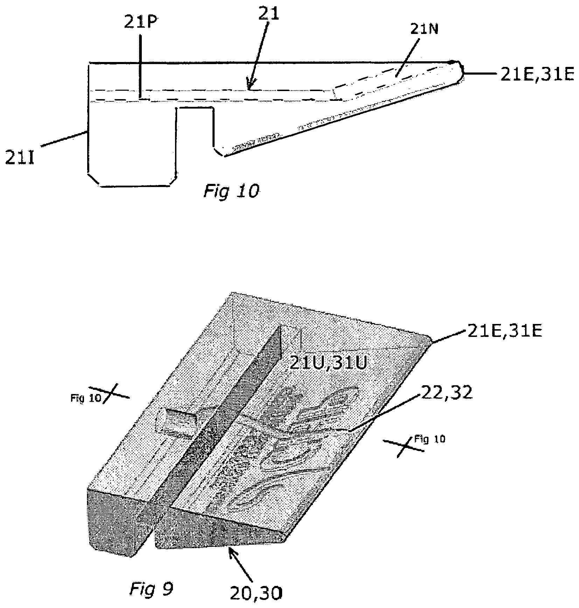

A further embodiment of the flat insert 20,30 is shown in figures 9 and 10.

As shown in figure 10, the inner channel 21 defining the dispensing channel of the flat insert or of an intermediate element associated to the flat insert comprises a first linear section 21P starting from the inlet opening and a second linear section 21N ending with the outlet opening, said first and second linear sections communicating the one with the other, whereby the first linear section has a first central axis, while the second linear section has a second central axis, whereby an angle comprised between 100° and 160° is defined between said first and second central axes of said first and second linear sections, and whereby preferably the first linear section has an open cross section (defined perpendicular to the first central axis) which is advantageously at least 50% (preferably from 75% up to 250%) greater than the open cross section (defined perpendicular to the second central axis) of the second linear section.

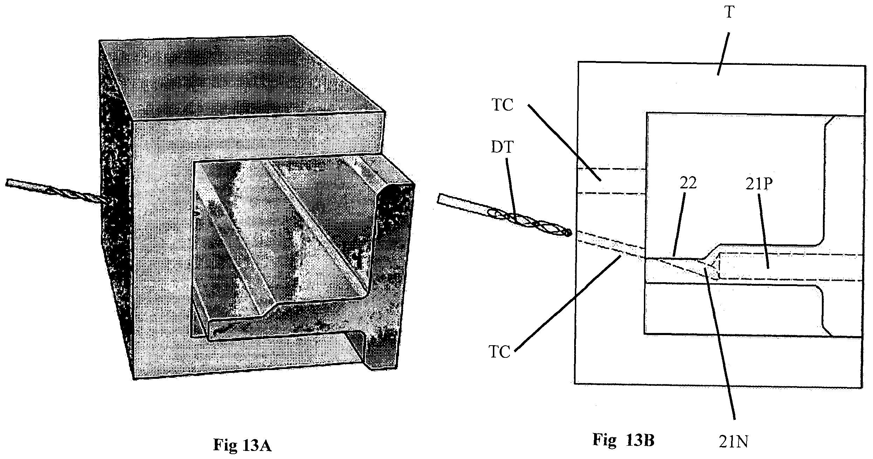

Figures 13A and 13B are views of a tool T adapted for the correct drilling of the end linear channel portion 21N ending with the outlet opening 22 for the lubricant, as well as the linear channel portion 21P ending with the inlet opening 21I. The tool has a portion in the form of a U-profile adapted to receive a portion of the insert, advantageously for maintaining the insert in position within the gap or chamber of the tool. A wall (such as the web portion of the U profile) is provided with one or more open guiding channels TC for a drilling tool DT (which can the same or different). The drilling tool DT can thus be moved along said guiding channel, whereby ensuring a correct inclination of the drilling tool with respect to the direction of the linear portion 21P of the lubricant channel. Such a tool can also be used for drilling portions of supporting guiding profiles, for forming the portion of a lubricant channel ending at least partially to the top surface of the supporting guiding profile or portion thereof 11,12. Such a tool is advantageous, when the insert or supporting profile is made of metal, like steel, steel provided with a resistant or protective coating, stainless steel, etc.

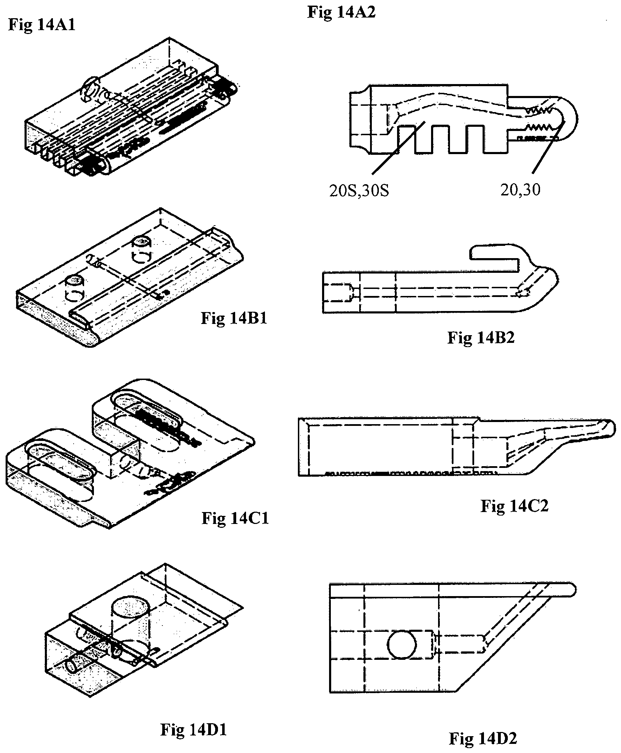

Figures 14 are various views of inserts (possibly with an intermediate element) 11 or 12 made of transparent or translucent material enabling to view the inner lubricant channel 21,31 (shown in dashed lines).

The insert of the embodiment of figures 14A1 and 14A2 comprises a main intermediate portion 20S,30S, and an end supporting portion 20,30 (acting as flat insert) which can be clipped on the main intermediate portion. The supplemental supporting and lubrication portion is provided with a channel provided with the lubricant outlet opening. The shape of the supplemental supporting portion or of the lubricant outlet opening can be selected in function of the supporting profile 11,12 or in function of the type of flange of the bottles to be moved.

Figures 15 to 17 shows a top lubrication insert or top lubrication device which can be attached on to the guiding profile.
Such lubricant dispensing means are easy to be replaced, in case of problems, while not taking large space. As the top lubrication device or insert is easily mounted, it can be easily replaced in case of need (for example in case of dust problem within the inner channel or at the outlet), such replacement does not requiring a long period of stoppage of the air conveyor.

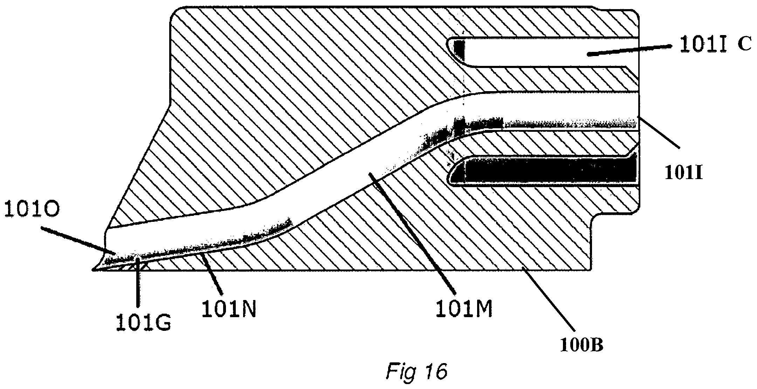

The possible groove 101G along the bottom face 100B is shown in dashed lines on figure 16.

The top lubrication device or insert or an intermediate element associated to the flat insert has advantageously one or more of the following details:
the top lubrication device or insert is preferably made of plastic, for example of a thermo formable fluorinated polymer, especially in fluoro polyethylene, fluoro propylene or fluoro ethylene - propylene copolymer. Other possible materials are acrylic resin, methacrylic resin, acrylic-methacrylic resin, PET, PETP, etc.

And/or
the top lubrication device or insert or an intermediate element associated to the flat insert is at least partly made of a transparent polymer or copolymer, whereby enabling a control of the flow of lubricant through the inner channel. And/or
the top lubrication device or insert or an intermediate element associated to the flat insert of at least one of the first or second lubricant dispensing means has a curved free guiding edge.

And/or
the lubricant dispensing system for the first and second lubricant dispensing means is adapted for delivering intermittently lubricant doses of advantageously less than 1ml, preferably less than 0.5ml, most preferably less than 0.1ml per top lubrication device or insert.

And/or
the top lubrication device or insert or an intermediate element associated to the flat insert is provided with a tube system 102 at its inlet, said tube system being adapted for an easy connection to a tube of the lubricant dispensing system.

And/or
the top lubrication device or insert or an intermediate element associated to the flat insert is provided with a tube system at its inlet, said tube system comprising a first tube portion and a second tube portion connected there between by a connector 102C enabling a relative rotation movement between the first tube portion and the second tube portion.

And/or
The top lubrication device or insert has the shape of a plug with a substantially circular cross section,
And/or
The top lubrication device or insert or an intermediate element is associated to fixing means 105 for attaching the top lubrication device or insert or an intermediate element onto the upper face of the first or second supporting guiding profile, whereby the top lubrication device or insert is provided with a means enabling to adapt the position of the outlet by a rotation movement (for example the fixing means have a rod extending within an eyelet opening 106,107 , whereby during the rotation of the top lubrication device or insert, said rod is moved within the eyelet opening. Said eyelet 106,107 acting also then as means for limiting the rotation movement of the insert.

In case the guiding profile is made of a (advantageously sole) material, plastic or metallic (possibly metallic with one or more protection coating layers), and in case the said guiding profile has a minimum thickness of at least 0.5cm, advantageously of at least 1cm, the first or second guiding profile can be drilled so as to form one or more lubricating dispensing channels with an outlet opening extending at least partly along the upper face of the guiding profile, adjacent to the lateral guiding edge. A coating can also be operated after drilling so as to provided the inner drilled channel with the required coating.

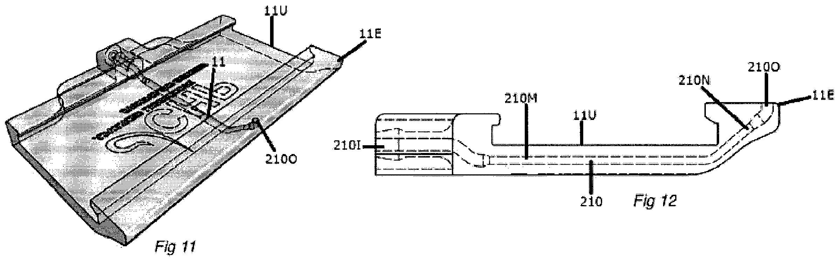

In this embodiment, the air conveyor of the invention can be such that the first supporting guiding profile (11) and the second supporting guiding profile are comprising respectively a first lubricant dispensing means and a second lubricating dispensing means, said first and second lubricant dispensing means comprising each a dispensing channel 210 having an inlet 2101 adapted to be connected to a lubricant dispensing system, and an outlet 2100 with an outlet opening with an equivalent diameter of 0.3mm to 15mm, especially between 0.5mm and 7mm, said 40 outlet opening being located at least partly along the upper face 11U of the first or second guiding profile, adjacent to the first or second lateral guiding edge 11E. (see figures 11 and 12)

According to an advantageous detail of an embodiment the inner channel defining the dispensing channel comprises a first linear section starting from the inlet opening 210M and a second linear section 210N ending with the outlet opening, said first and second linear sections communicating the one with the other, whereby the first linear section has a first central axis, while the second linear section has a second central axis, whereby an angle comprised between 90° and 179°, advantageously from 100° and 160° is defined between said first and second central axes of said first and second linear sections. The first linear section has an open cross section (defined perpendicular to the first central axis) which is advantageously at least 50% greater than the open cross section (defined perpendicular to the second central axis) of the second linear section.

The lubricant dispensing system for the first and second lubricant dispensing means is advantageously adapted for delivering intermittently lubricant doses of advantageously less than 1ml, preferably less than 0.5ml, most preferably less than 0.1ml.

The invention relates thus also to a method for moving plastic bottles or necks thereof along a guiding path of an an air conveyor provided with lubricant dispensing means as disclosed here before. The lubricant is provided at doses of less than 5ml per hour and per flat insert.

In said process, outside the scope of the invention, the lubricant dispensed to the flat inserts comprises advantageously at least a mineral oil, PTFE (or equivalent) and wax, said lubricant having the form of a substantially water free PTFE (or equivalent) dispersion, the PTFE (or equivalent) being in the form of particles with a particle size of less than 3µm, advantageously less than 1µm.

The lubricant comprises also advantageously one or more alcohol's, especially ethanol or propanol.

Especially, the lubricant comprises PTFE (or equivalent) particles in the form of PTFE (or equivalent) micro and/or nano fibers with a length of less than 3 µm and a thickness of less than 0.5µm, advantageously less than 0,2µm.

Especially, the lubricant is a stable (to heat between -20°C and 75°C for at least 12 months) substantially water free lubricant composition adapted for the use of any one of the claims 23 to 27, said composition comprising up to 20% by weight of PTFE micro and/or nano fibers with a length of less than 3µm and a thickness of less than 0.5µm, advantageously less than 0,2µm, said PTFE micro and/or nano fibres being dispersed in a mix comprising at least a mineral oil, a wax and an alcohol, said lubricant having advantageously a viscosity of less than 400 m. Pa. s at 25°C.

## Claims

1. An air conveyor (1) adapted for moving containers (2) having a top portion with a collar (3) with a downwards face (3a) by applying a pneumatic force on said containers, the conveyor (1) comprising:
- An gas directing means adapted for directing gas towards the container (2) to be moved;
- A supporting path comprising a first supporting guiding profile (11) with a first lateral guiding edge (11E) and a second supporting guiding profile (12) with a second lateral guiding edge (12E), said second lateral guiding edge (12E) being distant from the said first lateral guiding edge (11E) for defining there between an open space (O) for the top portion of the containers (2) to be moved, said first and second supporting guiding profiles (11,12) having each an upper face (11U,12U) acting as supporting face contacting a portion of the downwards face (3a) of the collar (3) of the top portion of the containers (2) to be moved,
whereby the first supporting guiding profile (11) and the second supporting guiding profile (12) are associated respectively with a first lubricant dispensing means (20) and a second lubricating dispensing means (30), said first and second lubricant dispensing means (20,30) comprising each a dispensing channel (21,31) having an inlet (211,31I) adapted to be connected to a lubricant dispensing system (40), and an outlet (21O,31O) with an outlet opening (22,32) with an equivalent diameter of 0.3mm to 15mm, especially between 0.5mm and 7mm, **characterised in that**, the first and second lubricant dispensing means (20,30) are each a flat insert with a thickness of preferably less than 2 cm, a length of preferably less than 15cm and a width of preferably less than 5cm, made of a plastic and/or metallic material, said flat insert comprising an one piece body with an inner channel (21,31) defining the dispensing channel element having an inlet (21I,31I) adapted to be connected to a lubricant dispensing system (40), and an outlet (210,310) with an outlet opening with an equivalent diameter of 0.3mm to 15mm, said one piece body having a free edge (21E,31E) extending from a first end up to a second end, said one piece body being adapted to be mounted on or associated to the first or second supporting guiding profile (11,12), possibly with interposition of an intermediate element, so that the free edge (21E,31E) of the one piece body forms a continuous extension of the first or second lateral guiding edge (11E,12E) of the first or second profile (11,12), whereby said one piece body comprises a flat surface (21U,31U) adjacent to the said free edge (21E,31E) and adapted for supporting a portion of the downwards face (3a) of the collar of the top portion of the containers (2) to be moved, and whereby said outlet opening (22,23) extends at least partly along said flat surface (21U,31U) adjacent to the said free edge (21E,31E),
whereby the first and second supporting guiding profiles (11,12) comprise advantageously each a longitudinal support system (110,120), at least two supporting guiding strips or flaps (111,121) adapted to be attached on the longitudinal support system of the first or second supporting guiding profiles (11,12), said at least two supporting guiding flaps or strips (111,121) having a free longitudinal edge (11E,12E) adapted to form a portion of the first or second lateral guiding edge element, the said first and a second supporting guiding strips or flaps (111a,111b,121a,121b) of said at least two supporting guiding profiles (11,12) being separated the one with respect to the other by a flat insert (20,30) attached to the longitudinal support system (110,120), said flat insert (20,30) comprising an one piece body having a free edge (21E,31E) extending from a first end (24) up to a second end (25), said one piece body being mounted on the longitudinal support system (110,120) so that the free edge of the one piece body forms a continuous extension between the free longitudinal edge of the first supporting guiding strip and the free longitudinal edge of the second supporting guiding strip,

2. The air conveyor of claim 1, in which the first and second lubricant dispensing means (20,30) are shifted the one with respect to the other, so that the first lubricant dispensing means (20) and the second lubricant dispensing means (30) are contacting a portion of the downwards face (3a) of the collar of the top portion of a container (2) to be moved at different moments, in which the first and second lubricant dispensing means (20,30) have advantageously free edges (21E,31E) not in front the one with respect to the other, the free edges (21E,31E) of said first and second lubricant dispensing means (20,30) being distant the one with respect to the other by a distance comprised between 5 and 50cm, advantageously from 10cm and 3 0cm.

3. The air conveyor of any one of the claims 1 to 2, in which the flat insert (20,30) or an intermediate element associated to the flat insert is made in a plastic material, preferably a thermo formable plastic material by preferably three dimension printing (3D thermo forming), the flat insert (20,30) or an intermediate element associated to the flat insert being at least partly made of a transparent polymer or copolymer, whereby enabling a control of the flow of lubricant through the inner channel (21,31).

4. The air conveyor of any one of the claims, in which the first and second supporting guiding profiles (11,12) comprise each a longitudinal support system (110,120), whereby each longitudinal support system (110,120) and the first or second lubricant dispensing means (20,30) are provided with attaching means adapted for enabling a fixation of the first or second lubricant dispensing means (20,30) on the longitudinal support system (110,120) by a click system, in which the flat insert (20,30) or an intermediate element associated to the flat insert is advantageously at least partly flexible along a longitudinal axis, while the flat insert or an intermediate element associated to the flat insert is preferably provided with a handling means along an edge opposite to the free edge which forms a continuous extension of the first or second lateral guiding edge (11E,12E) of the first or second profile (11,12).

5. The air conveyor of claim 4, in which the flat insert (20,30) has a substantially a U- or L- shaped cross section with a flat web (26,36) bearing at its two longitudinal ends a first aisle or flange (27,37) with the free edge which forms a continuous extension of the first or second lateral guiding edge (11E,12E) of the first or second profile (11,12), and a second aisle or flange (28,38) distant from the first aisle or flange (27,37), whereby the flat web (26,36) is provided with an extension (29,39) adapted for forming a handling means.

6. The air conveyor of any one of the preceding claims, in which the inlet (21I) of the flat insert (20,30) or an intermediate element associated to the flat insert is provided with a easy connecting means for connecting the flat insert to a tube connected to the lubricant dispensing system (40).

7. The air conveyor of any one of the preceding claims, in which the free edge of the flat insert (20,30) or an intermediate element associated to the flat insert is formed by a substantially flat surface connected to an upper flat surface (21U) through a connecting area (21C) having in cross section a radius of curvature of less than 2mm, advantageously less than 1mm, preferably less than 0.5mm.

8. The air conveyor of any one of the preceding claims, in which the flat insert (20,30) or an intermediate element associated to the flat insert of at least one of the first or second lubricant dispensing means (40) has a curved free guiding edge.

9. The air conveyor of any one of the preceding claims, in which the lubricant dispensing system (40) for the first and second lubricant dispensing means (20,30) is adapted for delivering intermittently lubricant doses of less than 1ml, advantageously less than 0.5ml.

10. The air conveyor of any one of the preceding claims, in which the flat insert or an intermediate element associated to the flat insert is provided with a tube system at its inlet, said tube system (29) being advantageously adapted for an easy connection to a tube of the lubricant dispensing system (40), while preferably comprising a first tube portion (29A) and a second tube portion (29B) connected there between by a connector (29C) enabling a relative rotation movement between the first tube portion (29A) and the second tube portion (29B).

11. The air conveyor of any one of the preceding claims, in which the outlet opening (22) of the flat insert (20,30) or an intermediate element associated to the flat insert is located at least partly along the said free edge (21E) which forms a continuous extension of the first or second lateral guiding edge (11E,12E) of the first or second profile (11,12).

12. The air conveyor of any one of the preceding claims, in which the outlet opening (22) of the said one piece body (20,30) or of an intermediate element associated to the flat insert extends only along the said flat surface adjacent to the said free edge (21E).

13. The air conveyor of any one of the preceding claims, in which the free edge (21E) of the said one piece body (20,30) or of an intermediate element associated to the flat insert has in transversal cross-section a circular portion on an angle of more than 90°, advantageously from 90° to 179°, whereby the outlet opening extends advantageously in the circular portion of the free edge adjacent to the flat surface, advantageously on a section up to 10° of said circular portion.

14. The air conveyor of any one of the preceding claims, in which the inner channel (21) defining the dispensing channel comprises a first linear section (21P) adjacent or starting from the inlet opening (21I) and a second linear section (21N) ending with the outlet opening (210), said first and second linear sections (21P,21N) communicating the one with the other, whereby the first linear section has a first central axis, while the second linear section has a second central axis, whereby an angle comprised between 90° and 179°, especially between 100° and 160°, is defined between said first and second central axes of said first and second linear sections, and whereby preferably the first linear section has an open cross section (defined perpendicular to the first central axis) which is advantageously at least 50% greater than the open cross section (defined perpendicular to the second central axis) of the second linear section.

15. The method for moving plastic bottles or necks thereof along a guiding path of an air conveyor according to any one of the preceding claims, in which lubricant is advantageously provided at doses of less than 5ml per hour and per flat insert.

## Patentansprüche

1. Luftförderer (1), der geeignet ist zum Bewegen von Behältern (2), die einen oberen Abschnitt mit einem Kragen (3) mit einer nach unten gerichteten Fläche (3a) aufweisen, indem eine pneumatische Kraft auf die Behälter ausgeübt wird, wobei der Förderer (1) Folgendes umfasst:
- eine Gasleiteinrichtung, die geeignet ist, Gas in Richtung des zu bewegenden Behälters (2) zu leiten;
- eine Stützbahn, die ein erstes stützendes Führungsprofil (11) mit einer ersten seitlichen Führungskante (11E) und ein zweites stützendes Führungsprofil (12) mit einer zweiten seitlichen Führungskante (12E) umfasst, wobei die zweite seitliche Führungskante (12E) von der ersten seitlichen Führungskante (11E) beabstandet ist, um dazwischen einen offenen Raum (O) für den oberen Abschnitt der zu bewegenden Behälter (2) zu definieren, wobei das erste und das zweite stützende Führungsprofil (11, 12) jeweils eine obere Fläche (11U, 12U) aufweisen, die als Stützfläche wirkt, die einen Abschnitt der nach unten gerichteten Fläche (3a) des Kragens (3) des oberen Abschnitts der zu bewegenden Behälter (2) berührt,
wobei das erste stützende Führungsprofil (11) und das zweite stützende Führungsprofil (12) jeweils einem ersten Schmiermittelabgabemittel (20) und einem zweiten Schmiermittelabgabemittel (30) zugeordnet sind, wobei das erste und das zweite Schmiermittelabgabemittel (20, 30) jeweils einen Abgabekanal (21, 31) umfassen, der einen Einlass (21I, 31I), welcher geeignet ist, mit einem Schmiermittelabgabesystem (40) verbunden zu werden, und einen Auslass (21O, 31O) mit einer Auslassöffnung (22, 32) mit einem äquivalenten Durchmesser von 0,3 mm bis 15 mm, insbesondere zwischen 0,5 mm und 7 mm, aufweist,
**dadurch gekennzeichnet, dass** die ersten und zweiten Schmiermittelabgabemittel (20, 30) jeweils ein flacher Einsatz mit einer Dicke von vorzugsweise weniger als 2 cm, einer Länge von vorzugsweise weniger als 15 cm und einer Breite von vorzugsweise weniger als 5 cm sind, der aus einem Kunststoffmaterial und/oder einem metallischen Material hergestellt ist, wobei der flache Einsatz einen einstückigen Körper mit einem inneren Kanal (21, 31) umfasst, der das Abgabekanalelement definiert, das einen Einlass (21I, 31I), welcher geeignet ist, mit einem Schmiermittelabgabesystem (40) verbunden zu werden, und einen Auslass (21O, 31O) mit einer Auslassöffnung mit einem äquivalenten Durchmesser von 0,3 mm bis 15 mm aufweist, wobei der einstückige Körper eine freie Kante (21E, 31E) aufweist, die sich von einem ersten Ende bis zu einem zweiten Ende erstreckt, wobei der einstückige Körper geeignet ist, an dem ersten oder dem zweiten tragenden Führungsprofil (11, 12) angebracht oder diesem zugeordnet zu sein, möglicherweise unter Dazwischenfügen eines Zwischenelements, so dass die freie Kante (21E, 31E) des einstückigen Körpers eine kontinuierliche Verlängerung der ersten oder zweiten seitlichen Führungskante (11E, 12E) des ersten oder zweiten Profils (11, 12) bildet, wobei der einstückige Körper eine plane Fläche (21U, 31U) umfasst, die an die freie Kante (21E, 31E) angrenzt und geeignet ist, einen Abschnitt der nach unten gerichteten Fläche (3a) des Kragens des oberen Abschnitts der zu bewegenden Behälter (2) zu stützen, und wobei sich die Auslassöffnung (22, 23) zumindest teilweise entlang der plane Fläche (21U, 31U) angrenzend an die freie Kante (21E, 31E) erstreckt, wobei das erste und das zweite tragende Führungsprofil (11, 12) vorteilhafterweise jeweils ein Längsträgersystem (110, 120), zumindest zwei tragende Führungsstreifen oder -laschen (111, 121) aufweisen, die geeignet sind, an dem Längsträgersystem des ersten oder des zweiten tragenden Führungsprofils (11, 12) befestigt zu werden, wobei die zumindest zwei tragenden Führungslaschen oder - streifen (111, 121) eine freie Längskante (11E, 12E) aufweisen, die geeignet ist, einen Abschnitt des ersten oder des zweiten seitlichen Führungskantenelements zu bilden, wobei die ersten und die zweiten tragenden Führungsstreifen oder -laschen (111a, 111b, 121a, 121b) der zumindest zwei tragenden Führungsprofile (11, 12) voneinander durch einen flachen Einsatz (20, 30) getrennt sind, der an dem Längsträgersystem (110, 120) angebracht ist, wobei der flache Einsatz (20, 30) einen einstückigen Körper umfasst, welcher eine freie Kante (21E, 31E) aufweist, die sich von einem ersten Ende (24) bis zu einem zweiten Ende (25) erstreckt, wobei der einstückige Körper an dem Längsträgersystem (110, 120) so angebracht ist, dass die freie Kante des einstückigen Körpers eine kontinuierliche Verlängerung zwischen der freien Längskante des ersten tragenden Führungsstreifens und der freien Längskante des zweiten tragenden Führungsstreifens bildet.

2. Luftförderer nach Anspruch 1, bei dem das erste und das zweite Schmiermittelabgabemittel (20, 30) gegeneinander versetzt sind, so dass das erste Schmiermittelabgabemittel (20) und das zweite Schmiermittelabgabemittel (30) einen Teil der nach unten gerichteten Fläche (3a) des Kragens des oberen Teils eines zu bewegenden Behälters (2) zu unterschiedlichen Zeitpunkten berühren, wobei das erste und das zweite Schmiermittelabgabemittel (20, 30) vorteilhafterweise freie Kanten (21E, 31E) aufweisen, die in Bezug auf einander nicht voreinander liegen, wobei die freien Kanten (21E, 31E) des ersten und des zweiten Schmiermittelabgabemittels (20, 30) in Bezug auf einander um einen Abstand entfernt sind, der zwischen 5 und 50 cm, vorteilhafterweise zwischen 10 cm und 30 cm, umfasst.

3. Luftförderer nach einem der Ansprüche 1 bis 2, bei dem der flache Einsatz (20, 30) oder ein dem flachen Einsatz zugeordnetes Zwischenelement aus einem Kunststoffmaterial, vorzugsweise einem thermisch verformbaren Kunststoffmaterial durch vorzugsweise dreidimensionales Drucken (3D-Thermoverformung), hergestellt ist, wobei der flache Einsatz (20, 30) oder ein dem flachen Einsatz zugeordnetes Zwischenelement zumindest teilweise aus einem transparenten Polymer oder Copolymer hergestellt ist, wodurch eine Steuerung des Durchflusses von Schmiermittel durch den inneren Kanal (21, 31) ermöglicht wird.

4. Luftförderer nach einem der Ansprüche, bei dem das erste und das zweite tragende Führungsprofil (11, 12) jeweils ein Längsträgersystem (110, 120) umfassen, wobei jedes Längsträgersystem (110, 120) und das erste oder zweite Schmiermittelabgabemittel (20, 30) mit Befestigungsmitteln versehen sind, die geeignet sind, eine Fixierung des ersten oder zweiten Schmiermittelabgabemittels (20, 30) an dem Längsträgersystem (110, 120) durch ein Klicksystem zu ermöglichen, wobei der flache Einsatz (20, 30) oder ein dem flachen Einsatz zugeordnetes Zwischenelement vorteilhafterweise zumindest teilweise entlang einer Längsachse flexibel ist, während der flache Einsatz oder ein dem flachen Einsatz zugeordnetes Zwischenelement vorteilhafterweise mit einem Handhabungsmittel entlang einer der freien Kante gegenüberliegenden Kante versehen ist, die eine kontinuierliche Verlängerung der ersten oder zweiten seitlichen Führungskante (11E, 12E) des ersten oder zweiten Profils (11, 12) bildet.

5. Luftförderer nach Anspruch 4, bei dem der flache Einsatz (20, 30) im Wesentlichen einen U- oder L-förmigen Querschnitt aufweist, mit einem flachen Steg (26, 36), der an seinen beiden Längsenden eine erste Schneise oder einen Flansch (27, 37) mit der freien Kante trägt, die eine durchgehende Verlängerung der ersten oder zweiten seitlichen Führungskante (11E, 12E) des ersten oder zweiten Profils (11, 12) bildet, und eine zweite Schneise oder einen zweiten Flansch (28, 38), die/der von der ersten Schneise oder dem ersten Flansch (27, 37) beabstandet ist, wobei der flache Steg (26, 36) mit einer Verlängerung (29, 39) versehen ist, die dazu geeignet ist, ein Handhabungsmittel auszubilden.

6. Luftförderer nach einem der vorangegangenen Ansprüche, bei dem der Einlass (211) des flachen Einsatzes (20, 30) oder ein dem flachen Einsatz zugeordnetes Zwischenelement mit einem einfachen Verbindungsmittel zum Verbinden des flachen Einsatzes mit einem an das Schmiermittelabgabesystem (40) angeschlossenen Rohr versehen ist.

7. Luftförderer nach einem der vorangegangenen Ansprüche, bei dem die freie Kante des flachen Einsatzes (20, 30) oder eines dem flachen Einsatz zugeordneten Zwischenelements durch eine im Wesentlichen plane Fläche gebildet ist, die mit einer oberen planen Fläche (21U) durch einen Verbindungsbereich (21C) verbunden ist, der im Querschnitt einen Krümmungsradius von weniger als 2 mm, vorteilhafterweise weniger als 1 mm, vorzugsweise weniger als 0,5 mm aufweist.

8. Luftförderer nach einem der vorangegangenen Ansprüche, bei dem der flache Einsatz (20, 30) oder ein dem flachen Einsatz zugeordnetes Zwischenelement von zumindest einem von dem ersten oder dem zweiten Schmiermittelabgabemittel (40) eine gekrümmte freie Führungskante aufweist.

9. Luftförderer nach einem der vorangegangenen Ansprüche, bei dem das Schmiermittelabgabesystem (40) für das erste und das zweite Schmiermittelabgabemittel (20, 30) zur intermittierenden Abgabe von Schmiermitteldosen von weniger als 1 ml, vorteilhafterweise von weniger als 0,5 ml, geeignet ist.

10. Luftförderer nach einem der vorangegangenen Ansprüche, bei dem der flache Einsatz oder ein dem flachen Einsatz zugeordnetes Zwischenelement an seinem Einlass mit einem Rohrsystem versehen ist, wobei das Rohrsystem (29) vorteilhafterweise für eine einfache Verbindung mit einem Rohr des Schmiermittelabgabesystems (40) geeignet ist, während es vorzugsweise einen ersten Rohrabschnitt (29A) und einen zweiten Rohrabschnitt (29B) umfasst, die dazwischen durch ein Verbindungsstück (29C) verbunden sind, das eine relative Drehbewegung zwischen dem ersten Rohrabschnitt (29A) und dem zweiten Rohrabschnitt (29B) ermöglicht.

11. Luftförderer nach einem der vorangegangenen Ansprüche, bei dem die Auslassöffnung (22) des flachen Einsatzes (20, 30) oder eines dem flachen Einsatz zugeordneten Zwischenelements zumindest teilweise entlang der freien Kante (21E) angeordnet ist, die eine kontinuierliche Verlängerung der ersten oder zweiten seitlichen Führungskante (11E, 12E) des ersten oder zweiten Profils (11, 12) bildet.

12. Luftförderer nach einem der vorangegangenen Ansprüche, bei dem sich die Auslassöffnung (22) des einstückigen Körpers (20, 30) oder eines dem flachen Einsatz zugeordneten Zwischenelements nur entlang der an die freie Kante (21E) angrenzenden planen Fläche erstreckt.

13. Luftförderer nach einem der vorangegangenen Ansprüche, bei dem die freie Kante (21E) des einstückigen Körpers (20, 30) oder eines dem flachen Einsatz zugeordneten Zwischenelements im Querschnitt einen kreisförmigen Abschnitt in einem Winkel von mehr als 90°, vorteilhafterweise von 90° bis 179°, aufweist, wobei sich die Auslassöffnung vorteilhafterweise in dem kreisförmigen Abschnitt der freien Kante, die an die plane Fläche angrenzt, erstreckt, vorteilhafterweise auf einem Teilabschnitt von bis zu 10° des kreisförmigen Abschnittes.

14. Luftförderer nach einem der vorangegangenen Ansprüche, bei dem der innere Kanal (21), der den Abgabekanal definiert, einen ersten linearen Abschnitt (21P), der an die Einlassöffnung (21I) angrenzt oder von dieser ausgeht, und einen zweiten linearen Abschnitt (21N) umfasst, der mit der Auslassöffnung (21O) endet, wobei der erste und der zweite lineare Abschnitt (21P, 21N) miteinander in Verbindung stehen, wobei der erste lineare Abschnitt eine erste Mittelachse aufweist, während der zweite lineare Abschnitt eine zweite Mittelachse aufweist, wobei ein Winkel von zwischen 90° und 179°, insbesondere zwischen 100° und 160°, zwischen der ersten und der zweiten Mittelachse des ersten und des zweiten linearen Abschnitts definiert ist, und wobei vorzugsweise der erste lineare Abschnitt einen offenen Querschnitt (definiert senkrecht zu der ersten Mittelachse) aufweist, der vorteilhafterweise wenigstens 50% größer ist als der offene Querschnitt (definiert senkrecht zu der zweiten Mittelachse) des zweiten linearen Abschnitts.

15. Verfahren zum Bewegen von Kunststoffflaschen oder deren Hälsen entlang einer Führungsbahn eines Luftförderers nach einem der vorangegangenen Ansprüche, bei dem das Gleitmittel vorteilhafterweise in einer Dosierung von weniger als 5 ml je Stunde und je flachen Einsatz bereitgestellt wird.

## Revendications

1. Convoyeur pneumatique (1) adapté pour déplacer des conteneurs (2) ayant une partie supérieure avec un col (3) avec une face tournée vers le bas (3a) en appliquant une force pneumatique sur lesdits conteneurs, le convoyeur (1) comprenant:
- un moyen de direction de gaz adapté pour diriger le gaz vers le récipient (2) à déplacer;
- un chemin de support comprenant un premier profil de guidage de support (11) avec un premier bord de guidage latéral (11E) et un second profil de guidage de support (12) avec un second bord de guidage latéral (12E), ledit second bord de guidage latéral (12E) étant éloigné dudit premier bord de guidage latéral (11E) pour y définir entre eux un espace ouvert (O) pour la partie supérieure des conteneurs (2) à déplacer, lesdits premier et second profils de guidage de support (11, 12) ayant chacun une face supérieure (11U, 12U) faisant office de face de support en contact avec une partie de la face tournée vers le bas (3a) du col (3) de la partie supérieure des récipients (2) à déplacer,
dans lequel le premier profil de guidage de support (11) et le second profil de guidage de support (12) sont associés respectivement à un premier moyen de distribution de lubrifiant (20) et à un second moyen de distribution de lubrifiant (30), lesdits premier et second moyens de distribution de lubrifiant (20, 30) comprenant chacun un canal de distribution (21, 31) ayant une entrée (21I, 31I) adaptée pour être reliée à un système de distribution de lubrifiant (40), et une sortie (210, 31O) avec une ouverture de sortie (22, 32) avec un diamètre équivalent de 0,3 mm à 15 mm, notamment entre 0,5 mm et 7 mm, **caractérisé en ce que**
les premier et second moyens de distribution de lubrifiant (20, 30) sont chacun un insert plat avec une épaisseur de préférence inférieure à 2 cm, une longueur de préférence inférieure à 15 cm et une largeur de préférence inférieure à 5 cm, réalisé en matière plastique et / ou métallique, ledit insert plat comprenant un corps monobloc avec un canal intérieur (21, 31) définissant l'élément de canal de distribution ayant une entrée (21I, 31I) adaptée pour être reliée à un système de distribution de lubrifiant (40), et une sortie (210, 31O) avec une ouverture de sortie d'un diamètre équivalent de 0,3 mm à 15 mm, ledit corps monobloc ayant un bord libre (21E, 31E) s'étendant d'une première extrémité jusqu'à une seconde extrémité, ledit corps monobloc étant adapté pour être monté sur ou associé au premier ou deuxième profilé de guidage de support (11,12), éventuellement avec interposition d'un élément intermédiaire, de sorte que le bord libre (21E, 31E) du corps monobloc forme un prolongement continu du premier ou du deuxième bord de guidage latéral (11E, 12E) du premier ou deuxième profil (11,12), dans lequel ledit corps monobloc comprend une surface plane (21U, 31U) adjacente audit bord libre (21E, 31E) et adaptée pour supporter une partie de la face tournée vers le bas (3a) du col de la partie supérieure des récipients (2) à déplacer, et dans lequel ladite ouverture de sortie (22, 23) s'étend au moins en partie le long de ladite surface plane (21U, 31U) adjacente audit bord libre (21E, 31E),
dans lequel les premier et second profilés de guidage de support (11, 12) comprennent avantageusement chacun un système de support longitudinal (110, 120), au moins deux bandes ou rabats de guidage de support (111, 121) adaptés pour être fixés sur le système de support longitudinal du premier ou du second profil de guidage de support (11, 12), lesdits au moins deux volets ou bandes de guidage de support (111, 121) ayant un bord longitudinal libre (11E, 12E) adapté pour former une partie du premier ou du second élément de bord de guidage latéral, lesdits premier et un deuxièmes bandes ou rabats de guidage de support (111a, 111b, 121a, 121b) desdits au moins deux profils de guidage de support (11, 12) étant séparés l'un par rapport à l'autre par un insert plat (20, 30) fixé sur le système de support longitudinal (110, 120), ledit insert plat (20, 30) comprenant un corps monobloc ayant un bord libre (21E, 31E) s'étendant d'une première extrémité (24) jusqu'à une seconde extrémité (25), ledit corps monobloc étant monté sur le système de support longitudinal (110,120) de sorte que le bord libre du corps monobloc forme une extension continue entre le bord longitudinal libre de la première bande de guidage de support et le bord longitudinal libre de la deuxième bande de guidage de support.

2. Convoyeur à air selon la revendication 1, dans lequel les premier et deuxième moyens de distribution de lubrifiant (20,30) sont décalés l'un par rapport à l'autre, de sorte que le premier moyen de distribution de lubrifiant (20) et le deuxième moyen de distribution de lubrifiant (30) sont en contact à des moments différents avec une partie de la face tournée vers le bas (3a) du col de la partie supérieure d'un récipient (2) à déplacer, dans lequel les premier et second moyens de distribution de lubrifiant (20,30) ont avantageusement des bords libres (21E, 31E) non en regard l'un par rapport à l'autre, les bords libres (21E, 31E) desdits premier et second moyens de distribution de lubrifiant (20, 30) étant distants l'un par rapport à l'autre d'une distance compris entre 5 et 50cm, avantageusement entre 10cm et 30cm.

3. Convoyeur à air selon l'une quelconque des revendications 1 à 2, dans lequel l'insert plat (20,30) ou un élément intermédiaire associé à l'insert plat est réalisé en une matière plastique, de préférence une matière plastique thermoformable de préférence par impression tridimensionnelle (thermoformage 3D), l'insert plat (20, 30) ou un élément intermédiaire associé à l'insert plat étant au moins en partie constitué d'un polymère ou copolymère transparent, permettant ainsi un contrôle du flux de lubrifiant à travers le canal interne (21,31).

4. Convoyeur à air selon l'une quelconque des revendications précédentes, dans lequel les premier et second profils de guidage de support (11, 12) comprennent chacun un système de support longitudinal (110, 120), chaque système de support longitudinal (110, 120) et le premier ou le second moyen de distribution de lubrifiant (20, 30) sont pourvus de moyens de fixation adaptés pour permettre une fixation du premier ou du second moyen de distribution de lubrifiant (20, 30) sur le système de support longitudinal (110, 120) par un système d'encliquetage, dans lequel l'insert plat (20 , 30) ou un élément intermédiaire associé à l'insert plat est avantageusement au moins en partie flexible selon un axe longitudinal, tandis que l'insert plat ou un élément intermédiaire associé à l'insert plat est de préférence pourvu d'un moyen de préhension le long d'un bord opposé au bord libre qui forme une extension continue du premier ou du deuxième bord de guidage latéral (11E, 12E) du premier ou du deuxième profil (11, 12).

5. Convoyeur à air selon la revendication 4, dans lequel l'insert plat (20, 30) a une section transversale sensiblement en forme de U ou de L avec une âme plate (26, 36) portant à ses deux extrémités longitudinales une première aile ou bride (27,37) avec le bord libre qui forme une extension continue du premier ou deuxième bord de guidage latéral (11E, 12E) du premier ou deuxième profil (11,12), et une deuxième aile ou bride (28,38) éloignée de la première aile ou bride (27, 37), dans lequel l'âme plate (26, 36) est pourvue d'une extension (29, 39) adaptée pour former un moyen de préhension.

6. Convoyeur à air selon l'une quelconque des revendications précédentes, dans lequel l'entrée (21I) de l'insert plat (20, 30) ou un élément intermédiaire associé à l'insert plat est pourvu d'un moyen de connexion facile pour connecter l'insert plat à un tube relié au système de distribution de lubrifiant (40).

7. Convoyeur à air selon l'une quelconque des revendications précédentes, dans lequel le bord libre de l'insert plat (20,30) ou d'un élément intermédiaire associé à l'insert plat est formé par une surface sensiblement plate reliée à une surface plane supérieure (21U) via une zone de raccordement (21C) ayant en section transversale un rayon de courbure inférieur à 2 mm, avantageusement inférieur à 1 mm, de préférence inférieur à 0,5 mm.

8. Convoyeur à air selon l'une quelconque des revendications précédentes, dans lequel l'insert plat (20,30) ou un élément intermédiaire associé à l'insert plat d'au moins l'un des premier ou second moyens de distribution de lubrifiant (40) présente une bord libre de guidage courbe.

9. Convoyeur à air selon l'une quelconque des revendications précédentes, dans lequel le système de distribution de lubrifiant (40) pour les premier et deuxième moyens de distribution de lubrifiant (20, 30) est adapté pour délivrer par intermittence des doses de lubrifiant inférieures à 1 ml, avantageusement inférieures à 0,5 ml.

10. Convoyeur à air selon l'une quelconque des revendications précédentes, dans lequel l'insert plat ou un élément intermédiaire associé à l'insert plat est pourvu d'un système de tube à son entrée, ledit système de tube (29) étant avantageusement adapté pour une connexion aisée à un tube du système de distribution de lubrifiant (40), tout en comprenant de préférence une première partie de tube (29A) et une deuxième partie de tube (29B) reliées entre elles par une connexion (29C) permettant un mouvement de rotation relatif entre la première partie de tube (29A) et la seconde partie de tube (29B) .

11. Convoyeur à air selon l'une quelconque des revendications précédentes, dans lequel l'ouverture de sortie (22) de l'insert plat (20,30) ou d'un élément intermédiaire associé à l'insert plat est située au moins en partie le long dudit bord libre (21E) qui forme une extension continue du premier ou du deuxième bord de guidage latéral (11E, 12E) du premier ou du deuxième profil (11, 12).

12. Convoyeur à air selon l'une quelconque des revendications précédentes, dans lequel l'ouverture de sortie (22) dudit corps monobloc (20,30) ou d'un élément intermédiaire associé à l'insert plat s'étend uniquement le long de ladite surface plane adjacente audit bord libre (21E).

13. Convoyeur à air selon l'une quelconque des revendications précédentes, dans lequel le bord libre (21E) dudit corps monobloc (20,30) ou d'un élément intermédiaire associé à l'insert plat présente en section transversale une portion circulaire sur un angle supérieur à 90°, avantageusement de 90° à 179°, l'ouverture de sortie s'étendant avantageusement dans la portion circulaire du bord libre adjacente à la surface plate, avantageusement sur une section jusqu'à 10° de ladite portion circulaire .

14. Convoyeur à air selon l'une quelconque des revendications précédentes, dans lequel le canal intérieur (21) définissant le canal de distribution comprend une première section linéaire (21P) adjacente ou partant de l'ouverture d'entrée (21I) et une deuxième section linéaire (21N) se terminant par l'ouverture de sortie (21O), lesdites première et deuxième sections linéaires (21P,21N) communiquant l'une avec l'autre, la première section linéaire ayant un premier axe central, tandis que la deuxième section linéaire a un deuxième axe central, dans lequel un angle compris entre 90° et 179°, en particulier entre 100° et 160°, est défini entre lesdits premier et second axes centraux desdites première et seconde sections linéaires, et dans lequel de préférence la première section linéaire a une section transversale ouverte (définie perpendiculairement au premier axe central) qui est avantageusement au moins 50% supérieure à la section transversale ouverte (définie perpendiculairement au deuxième axe central) de la deuxième section linéaire.

15. Procédé pour déplacer des bouteilles en plastique ou des cols de celles-ci le long d'un trajet de guidage d'un convoyeur à air selon l'une quelconque des revendications précédentes, dans lequel le lubrifiant est avantageusement fourni à des doses inférieures à 5 ml par heure et par insert plat.
